# EUROPEAN PATENT APPLICATION

(11) **EP 3 744 703 A1**
(43) Date of publication of application: **02.12.2020**
(21) Application number: 20176533.6
(22) Date of filing: 26.05.2020
(51) Int. Cl.: C04B 28/02, C04B 40/00, C04B 111/27, C04B 111/76

(54) **METHOD FOR MANUFACTURING CONCRETE**

(30) Priority: 27.05.2019 FI 20195441
(71) Applicant: Invest Saarelainen OY, 70100 Kuopio (FI)
(72) Inventor: Korhonen, Raija, 74120 Iisalmi (FI); Saarelainen, Sirkku, 70100 Kuopio (FI); Saarelainen, Seppo, 70100 Kuopio (FI)
(74) Representative: Kolster Oy Ab

(57) **Abstract**

The present invention relates to a method for manufacturing concrete. In the method, cement, water, and pore-forming agent are mixed into quartz containing stone material to form a concrete slurry. This is followed by adding plasticizing agent to the mixed concrete slurry and mixing, and finally adding silane to the concrete slurry containing plasticizing agent and mixing.

## Description

### Background of the invention

The invention relates to waterproof and frost-resistant concrete and a method for manufacturing the same.

A problem with prior art waterproof and frost-resistant concretes is that it has been difficult to manufacture concrete of a uniform quality and characteristics.

As concerns waterproofing, watertightness in prior art solutions is mainly based on coating a layer of concrete with a waterproofing (such as surface) layer, which requires an additional work stage. In practice, such a coated waterproofing layer has not remained waterproof for long enough, and even a small crack or hole in the coating waterproofing layer ruins the waterproofing of concrete.

### Brief description of the invention

It is therefore an object of the invention to provide a solution so as to enable the aforementioned problems to be solved. The object of the invention is achieved by a method and concrete which is characterised by what is stated in the independent claims. Preferred embodiments of the invention are disclosed in the dependent claims.

### Brief description of the drawings

The invention is now described in closer detail with reference to the accompanying drawing in which:
Figure 1 shows an embodiment of a method of manufacture of concrete;
Figure 2 shows a second embodiment of a method of manufacture of concrete;
Figure 3 shows a third embodiment of a method of manufacture of concrete;
Figure 4 shows a fourth embodiment of a method of manufacture of concrete; and
Figure 5 illustrates an internal structure of waterproof and frost-resistant concrete.

### Detailed description of the invention

A mixture of cement and water is referred to as cement paste. Cement paste allows natural stone material grains to be bonded, and with the concrete slurry thus formed, pieces of a desired shape may be cast. Once the cement paste has hardened, it is referred to as cement stone. Hardened concrete consists of cement stone and natural stone grains. Cement stone has pores of different sizes in it. These include: 1. sealing pores, 2. protective pores, 3. capillary pores, and 4. gel pores.

Waterproof and frost-resistant concrete may be produced when cement and water are mixed into quartz containing stone material to form a concrete slurry, and by adding pore-forming agent (also called air-entraining agents) and by mixing, adding plasticizing agent and by mixing, and adding an additive comprising silane and by mixing. The plasticizing agent ensures that the concrete will by itself be as compact as required and the internal friction of the concrete is reduced, which results in a concrete that is easy to cast. Practical tests have shown that an excellent outcome is reached when the concrete slurry is first finalized in other respects and then, only at the final step, silane is added into the concrete slurry otherwise completed.

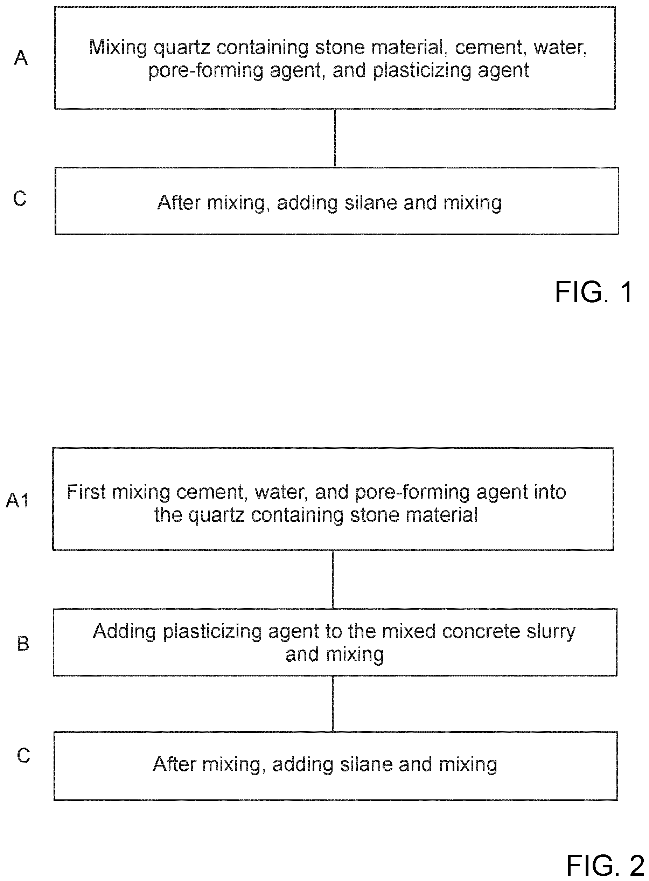

Additives may be added at several different stages, such as during the preparation step of a concrete slurry, to a finished concrete slurry or to finished concrete. Figure 1 shows an embodiment of a method of manufacture of waterproof and frost-resistant concrete, in which quartz containing natural stone material, cement, water, pore-forming agent, and plasticizing agent are mixed at step A. By mixing, a concrete slurry is created. The quartz containing natural stone material may be introduced as stones having a particle size up to about 16 mm, for instance.

At step C, silane is added into the concrete slurry, after which the concrete slurry is mixed. In practice, the silane in this example is added into the concrete slurry towards the end of its preparation.

By the method of Figure 1, a concrete slurry is created which, when used to build a structure, makes the structure thoroughly frost-resistant and waterproof. This is a most advantageous solution because if, later on, a hole, for example, is drilled into the structure, also the concrete at the bottom and in the walls of the hole is waterproof. This is not the case with the known solutions in which waterproofness is based on coating concrete with a waterproofing layer, because if a hole is drilled through the coating layer, its bottom or inner walls are not waterproof.

In the second embodiment of Figure 2, cement, water, and pore-forming agent are mixed into quartz containing stone material to form A1 a concrete slurry. Following this, plasticizing agent is added into the concrete slurry, and it is mixed B. Finally, an additive comprising silane is added into the concrete slurry that includes pore-forming and plasticizing agents, and it is mixed C.

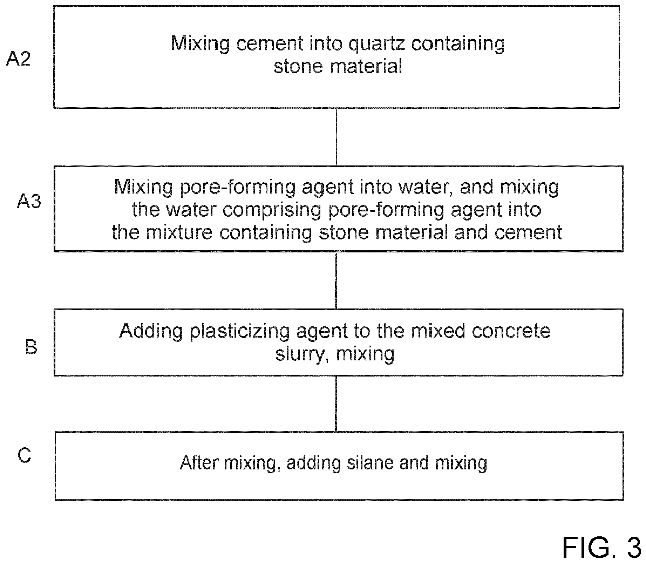

In the third embodiment of Figure 3, quartz containing stone material and cement are mixed with each other at step A2. At step A3, pore-forming agent is mixed into water and then the water that contains pore-forming agent is mixed into the mixture that includes stone material and cement. Following this, plasticizing agent is added into the concrete slurry, and it is mixed B, and finally silane is added into the concrete slurry, and it is mixed C.

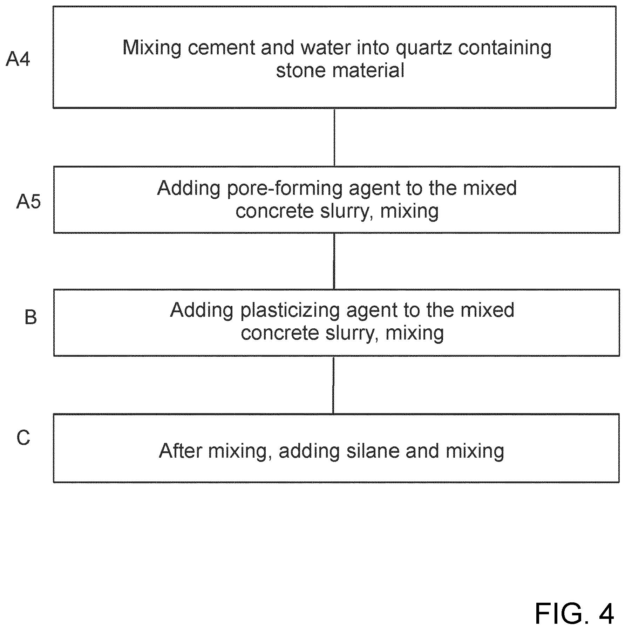

In the third embodiment of Figure 4, cement and water are mixed into the quartz containing stone material at step A4. At step A5, pore-forming agent is added and mixed. At step B, plasticizing agent is added and mixed. Finally, at step C, silane is added and mixed.

The pore-forming agent and the additive that comprises silane are important ingredients of concrete from the point of view of waterproofness and frost-resistance. Pore-forming agents reduce the surface tension of the concrete water and form the desired quantity of protective pores in the concrete, leaving room for the freezing water to expand, which consequently improves the frost-resistance of the concrete.

The silane added as an additive to the concrete slurry blocks the capillary pores and gel pores of the cement stone, whereby water cannot be absorbed in the concrete through them. Silanes react with the cement ingredients, forming small ridge-like nanomolecule straws evenly through the entire concrete slurry. The molecule straws in question have a very large surface area which converts the entering angle of water into such that water cannot force its way into the concrete.

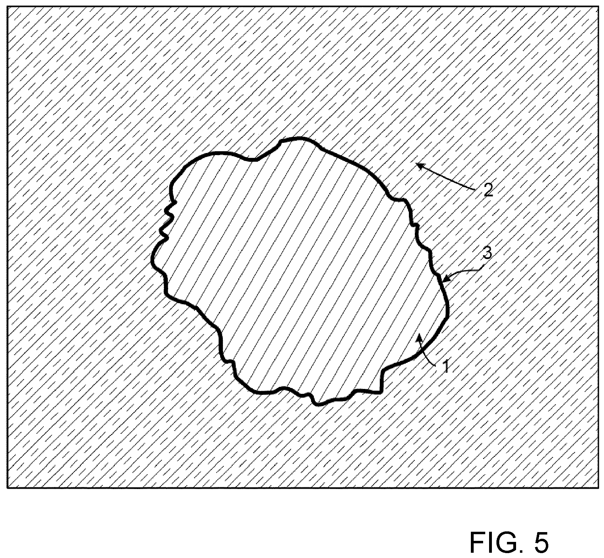

As water is attempting to pass through hardened concrete, it cannot make it through an individual natural stone grain, but finds its way through the cement stone that includes pores of different kinds. As water is trying to pass through hardened concrete, it tries to find a passage also in the boundary surface between cement stone and natural stone. However, such routes cannot be found because the cement paste seals up the boundary surface between the quartz containing stone material grains and cement stone by forming a separate phase on the boundary surface as the cement paste is absorbed into the pores of the stone material by 0.3 to 0.5% of the weight of the stone material and because silane blocks both capillary and gel pores. The phase forming on the boundary surface of the stone material and cement stone is illustrated in Figure 5, which illustrates the internal structure of waterproof and frost resistant concrete. Figure 5 shows by way of example a quartz containing stone grain 1, silane-containing cement stone 2, and a boundary surface phase forming between the stone grain 1 and cement stone 2.

The waterproof boundary surface phase is formed of the chemical-physical bond between silane and quartz mineral. The waterproof boundary surface phase is formed when a carbon atom (C) of silane covalently binds directly to a silicon atom (Si) of quartz mineral. However, silane does not block the protective pores formed by the pore-forming agent whereby the frost resistance of the concrete is maintained.

It is thus important in the manufacture of waterproof and frost-resistant concrete to use quartz containing stone material in order to be able to form the boundary surface phase between stone material and cement stone. Examples of such kinds of stone include granite, granite gneiss, and quartz-rich granitoid. An example of pore-forming agent comprises acrylonitrile polymer. Such pore-forming agent is sold by, for example, Oy Sika Finland Ab under the trademark SikaAer® Solid. Alternatively, pore-forming agent may contain a tenside. Such pore-forming agent is sold by, for example, Oy Sika Finland Ab under the trademark SikaAir®ProV5. An example of plasticizing agent comprises polycarboxylate. Such plasticizing agent is sold by, for example, Oy Sika Finland Ab under the trademark Sika®ViscoCrete®-2026RB. The additive comprising silane may for its part comprise, for example, triethoxyoctylsilane or similar

In the embodiments according to the invention, the concrete slurry has approximately 58 to 72 percent by volume of stone material; typically approximately 64 percent by volume, also a smaller amount of 58 percent by volume, or there may be as much as approximately 72 percent by volume of it. Concrete slurries have approximately 7 to 19 percent by volume of cement; typically approximately 12 percent by volume, sometimes a smaller amount of approximately 7 percent by volume, or there may be as much as approximately 19 percent by volume of it. Concrete slurries have approximately 15 to 30 percent by volume of water; typically approximately 19 percent by volume, sometimes a smaller amount of approximately 15 percent by volume, or there may be as much as approximately 30 percent by volume of it.

The following describes, by way of example, an embodiment for manufacturing waterproof and frost-resistant concrete. First, a concrete slurry is prepared by mixing 385 kg of cement, 1772.9 kg of stone material and batched water, the total amount of 130.7 kg, of which 9.4 kg was replaced with polymer water containing silane. It is simple to add the inventive substance replacing water, because the volume weight of the additive used in the invention, that is, polymer water, is almost the same as that of water. Following this, the concrete is mixed and into the concrete slurry produced, both pore-forming and plasticizing agents are added. The liquid according to the embodiment, that is, polymer water, may be used in considerably larger or smaller amounts than in the above example depending on the purpose of use, the kind of stone materials, and other additives such as various fibres, for example. The polymer water used in the method may also be used in concrete seaming, grouting, and lightweight aggregate products.

The waterproof and frost-resistant concrete prepared by said method thus comprises quartz containing stone material, cement, water, and additives. In addition, the concrete comprises as additives one or more of the following: pore-forming agent, plasticizing agent and silane-containing additive, wherein the pore-forming agent may comprise, for example, acrylonitrile polymer, the plasticizing agent may comprise, for example, polycarboxylate, and the silane-containing additive may comprise, for example, triethoxyoctylsilane or similar.

Those skilled in the art will find it obvious that, as technology advances, the basic idea of the invention may be implemented in many different ways. The invention and its embodiments are thus not restricted to the above-described examples but may vary within the scope of the claims.

## Claims

1. A method for manufacturing concrete, **characterized by**, to obtain waterproof and frost-resistant concrete the method comprises:
mixing with each other quartz containing natural stone material grains, cement, water, pore-forming agent, and plasticizing agent (A, B),
continuing mixing the mixture until a finished concrete slurry forms, and
after mixing, adding silane to the finished concrete slurry and mixing (C).

2. A method as claimed in claim 1, wherein mixing is implemented by:
first mixing cement, water, and pore-forming agent into the quartz containing stone material to form a concrete slurry (A1),
adding plasticizing agent to the mixed concrete slurry and mixing (B),
adding silane to the concrete slurry comprising plasticizing agent and mixing (C).

3. A method as claimed in claim 1, wherein mixing is implemented by:
mixing cement (A2) into the quartz containing stone material,
mixing pore-forming agent into water which is mixed with the quartz containing stone material and cement to form a concrete slurry (A3),
adding plasticizing agent to the mixed concrete slurry and mixing (B), and
adding silane to the concrete slurry containing plasticizing agent and mixing (C).

4. A method as claimed in claim 1, wherein mixing is implemented by:
mixing cement and water (A4) into the quartz containing stone material,
adding pore-forming agent when the quartz containing stone material, cement, and water have been mixed to form a concrete slurry (A5),
adding plasticizing agent to the mixed concrete slurry and mixing (B), and
adding silane to the concrete slurry containing plasticizing agent and mixing (C).

5. A method as claimed in any one of claims 1 to 4 for manufacturing concrete, wherein said pore-forming agent comprises acrylonitrile polymer.

6. A method as claimed in any one of claims 1 to 5 for manufacturing concrete, wherein said pore-forming agent comprises a tenside.

7. A method as claimed in any one of claims 1 to 6 for manufacturing concrete, wherein said plasticizing agent comprises polycarboxylate.

8. A method as claimed in any one of claims 1 to 7 for manufacturing concrete, wherein the silane is triethoxyoctylsilane.

9. A method as claimed in any one of claims 1 to 8 for manufacturing concrete, wherein
stone material is added by 58 to 72 percent by volume, cement is added by 7 to 19 percent by volume, and water is added by 15 to 30 percent by volume.

10. Concrete manufactured according to one of claims 1 to 9.
